# EUROPEAN PATENT APPLICATION

(11) **EP 1 205 680 A1**
(43) Date of publication of application: **15.05.2002**
(21) Application number: 01124477.9
(22) Date of filing: 12.10.2001
(51) Int. Cl.: F16C 35/077, F16C 23/08

(54) **Bearing assembly for a rotary shaft machine**

(30) Priority: 07.11.2000 LU 90672
(71) Applicant: Delphi Technologies, Inc., Troy, MI 48007 (US)
(72) Inventor: Clerx, Frank, 1621 Luxembourg (LU); Rahier, Olivier, 4053 Embourg (BE); Kneppers, Gérard, 7762 Bissen (LU)
(74) Representative: Beissel, Jean

(57) **Abstract**

A bearing assembly for a rotary shaft machine comprises a support wall (12) having an essentially cylindrical passage (18) therethrough. A rolling bearing (20) is mounted within the passage (18). The inner race (24) is mountable onto a shaft (22) in such a way as to abut against a shoulder (26) of this shaft (22). A capsule (32) comprises a cylindrical part (34) and spring means (36). The cylindrical part (34) is fitted in the passage (18) and receives the outer race (30). The diameter of the passage (18) is such that the cylindrical part (34), equipped with the rolling bearing (20), can be slidingly fitted therein. The spring means (36) bears on the support wall (12) and is operatively connected to the cylindrical part (34) in such a way that the latter exerts a spring force on the outer race (30). The spring force tends to push the rolling bearing (20) against the shoulder (26) so as to compensate operational play of the rolling bearing (20). The cylindrical part (34) and the passage (18) are configured in such a way as to interlock with each other, so as to prevent rotation of the cylindrical part (34) in the passage (18).

## Description

### Field of the invention

The present invention generally relates to a bearing assembly for a rotary shaft machine. More particularly, it relates to a bearing assembly to be used as a rear bearing assembly, i.e. opposed to the front bearing assembly next to the drive pulley, in a generator (or alternator).

### Background of the invention

Such a bearing assembly is disclosed in FR-A-2 729 442. A rolling bearing is mounted within a rear wall of a generator housing and supports a rotary shaft of the generator. The rolling bearing comprises an outer race, an inner race and rolling elements in between. The inner race is press-fitted onto the shaft and abuts against a shoulder of the shaft situated inside the generator housing. The outer race is received in a capsule having a cylindrical part and elastic U-shaped tabs. The cylindrical part is fitted in the rear wall but not pressed therein. The elastic U-shaped tabs extend from of the cylindrical part inside the generator housing and end with a flat part, which lies on the inner side of the rear wall. The flat part of each tab has an oblong aperture through which a screw is inserted to maintain the flat part on the rear wall and prevent rotation of the capsule, while however allowing radial movement of the tab. The capsule thus exerts an axial spring force on the outer race which tends to push the rolling bearing against the shoulder so as to compensate operational play of the rolling bearing. In such a bearing assembly, the capsule allows axial movement of the rolling bearing and achieves a permanent pre-load on the rolling bearing. A disadvantage of this bearing assembly is however that the tabs of the capsule have to be screwed onto the inner side of the rear wall to prevent rotation of the capsule. This complicates the structure of the bearing assembly and hence the assembly of its elements.

### Object of the invention

The object of the present invention is to provide a simpler bearing assembly, wherein the rolling bearing is allowed axial movement and is permanently pre-loaded. This object is achieved by a bearing assembly as claimed in claim 1.

### Summary of the invention

A bearing assembly for a rotary shaft machine in accordance with the invention comprises a support wall having an essentially cylindrical passage therethrough. A rolling bearing, which is mounted within the passage, has an inner race, an outer race and rolling elements in between, such as e.g. balls or rollers. The inner race is mountable onto a shaft in such a way as to be in abutment against a shoulder of this shaft. The bearing assembly further includes a capsule comprising a cylindrical part and spring means. The cylindrical part is fitted in the passage and receives the outer race. The diameter of the passage is such that the cylindrical part, equipped with the rolling bearing, can be slidingly fitted therein. The spring means bears on the support wall and is operatively connected to the cylindrical part in such a way that the latter exerts a spring force on the outer race. The spring force tends to push the rolling bearing against the shoulder so as to compensate operational play of the rolling bearing. According to an important aspect of the invention, the cylindrical part and the passage are configured in such a way as to interlock with each other, so as to prevent rotation of the cylindrical part in the passage. It follows that the cylindrical part, and thus the capsule, is automatically locked in the passage. There is no need to lock the capsule by means of e.g. screws or the like, after introduction of the capsule in the passage. The assembly of the present bearing assembly is thus simplified, due to its simple structure, which also benefits to the compactness of the bearing assembly. Moreover, as the spring means is not involved in the fixation of the capsule, it is not hindered in its travel. The capsule permits a permanent axial pre-load of the bearing and allows axial movement of the latter due to thermal expansion in the generator during operation. As a result, the capsule of the present assembly ensures an improved operation of the rolling bearing, thereby increasing its lifetime and reducing its noise in operation.

In a preferred embodiment, the cylindrical part is formed by at least two cylindrically curved elements arranged in such a way as to partially circumscribe an imaginary cylinder having preferably a diameter corresponding to that of the outer race. The two elements extend between an inwardly extending stop flange in abutment with the outer race and an outwardly extending connection flange operatively connected to the spring means out of the passage. Moreover, the passage is provided with at least two axial grooves in which the cylindrically curved elements are engaged. The depth of the grooves advantageously corresponds to the thickness of the cylindrically curved elements. As a result, the outer race can be directly in contact with the support wall in the passage in the cylindrical part, where it is not covered by the curved elements. This allows an improved cooling of the rolling bearing. Moreover, such a structure of the cylindrical part avoids an increase in radial tolerances of the part in which it is mounted, which also means that tolerances in the manufacturing of the cylindrical part can be wider. The cylindrically curved elements may be advantageously equally distributed about the circumference of the imaginary cylinder so as to simplify the alignment of the capsule with the axial grooves in the passage.

It shall be noted that the term "corresponding", used herein for dimensionally qualifying cooperating parts, means that the concerned dimension of the two parts do not vary greatly, and that they may be adapted so as to engage into each other in a tight or loose relationship.

In an alternative embodiment, the cylindrical part is a cylinder provided at one end with an inwardly extending stop flange in abutment with the outer race and at the other end with an outwardly extending connection flange operatively connected to the spring means. The cylinder is provided at its outer periphery with at least one protruding element. Moreover, the passage is provided with at least one axial groove in which the protruding element is received so as to prevent rotation of the cylindrical part. The inner diameter of the passage preferably corresponds to the outer diameter of the cylindrical part and the thickness of the protruding element preferably corresponds to the depth of the axial groove.

Advantageously, the spring means includes a spring washer having its inner border operatively connected to the connection flange and its peripheral border bearing on the support wall. The use of a spring washer allows a uniform interaction with the cylindrical part.

Preferably, the spring washer is formed in one piece with the cylindrical part. In such a case, the spring washer is advantageously a conical spring washer continuing the connection race.

The cylindrical part and the spring washer can however be manufactured separately. The spring washer should then be inserted between the support wall and the connection flange so that its inner border abuts against the connection flange. The spring washer may be a conical spring washer or a waved spring washer. Besides, individually manufactured spring washers and cylindrical parts can be attached together, for example by means of welding, such as e.g. spot welding.

It shall be noted that the spring means is advantageously designed such that the pre-load on the bearing assembly stays within a predetermined range. Hence, even if the bearing moves due to tolerance stack-up or thermal expansion, an optimal pre-load can be obtained on the rolling bearing.

At low speeds, the spring force is generally sufficient to prevent the rotation of the outer race in the cylindrical part of the capsule. The outer race is however preferably locked against rotation in the cylindrical part, so as to ensure improved operating conditions of the rolling bearing at all speeds. This is preferably achieved by press-fitting the cylindrical part onto the outer race. It is also possible to secure the outer race against rotation in the cylindrical part by e.g. providing a notch in the outer race interlocking with a protruding element in the capsule.

It shall be appreciated that the bearing assembly according to the invention can advantageously be used as rear bearing assembly in a generator. Indeed, such a bearing assembly can be rapidly and easily assembled in a generator housing, in particular due to the automatic locking of the capsule in the rear wall passage. Moreover, the possibility of permanently exerting an axial pre-load within a predetermined range on the rolling bearing ensures optimal running conditions of the latter. This proves advantageous for pulley driven generators but also for generators coupled to a drive shaft, where there is no radial load on the rolling bearing.

### Brief description of the drawings

The present invention will now be described, by way of example, with reference to the accompanying drawings, in which:
Fig.1: is a cross-sectional view of a preferred embodiment of a bearing assembly according to the invention;
Fig.2: a) to d) are schematical views illustrating different concepts of capsules;
Fig.3: is a perspective view of the capsule of the bearing assembly of Fig.1;
Fig.4: is a perspective view of the rear wall of the bearing assembly of Fig.1;
Fig.5: is a perspective view of another capsule;

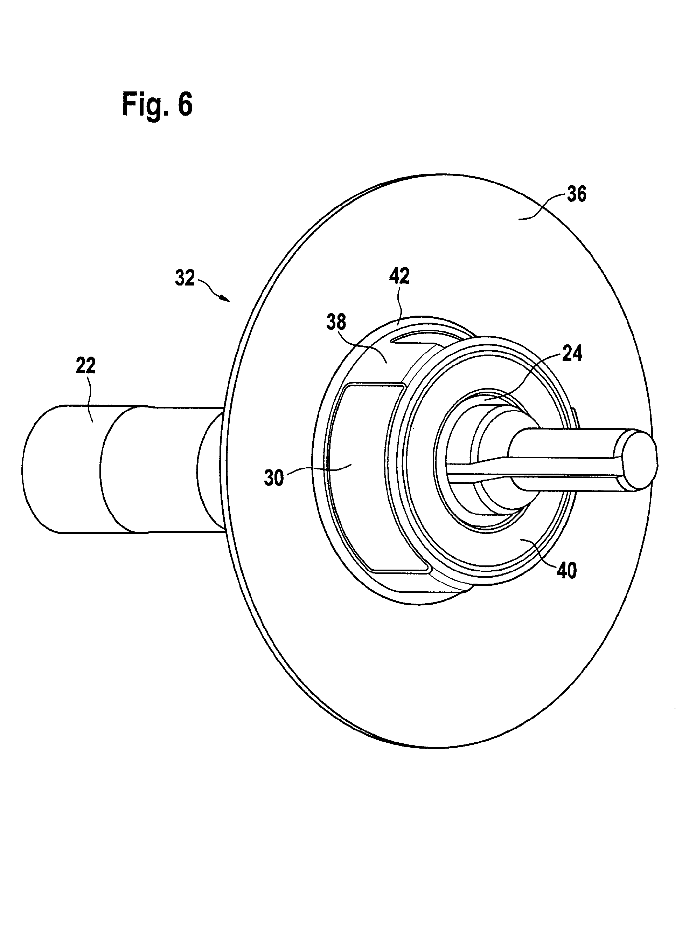

Fig.6: is a perspective view of a shaft ready to be inserted in the passage of the rear wall of Fig.4; and
Fig.7: is a graph illustrating the spring force of a spring washer in function of its height.
In the Figures, same reference numbers indicate similar or equivalent elements.

### Detailed description of a preferred embodiment

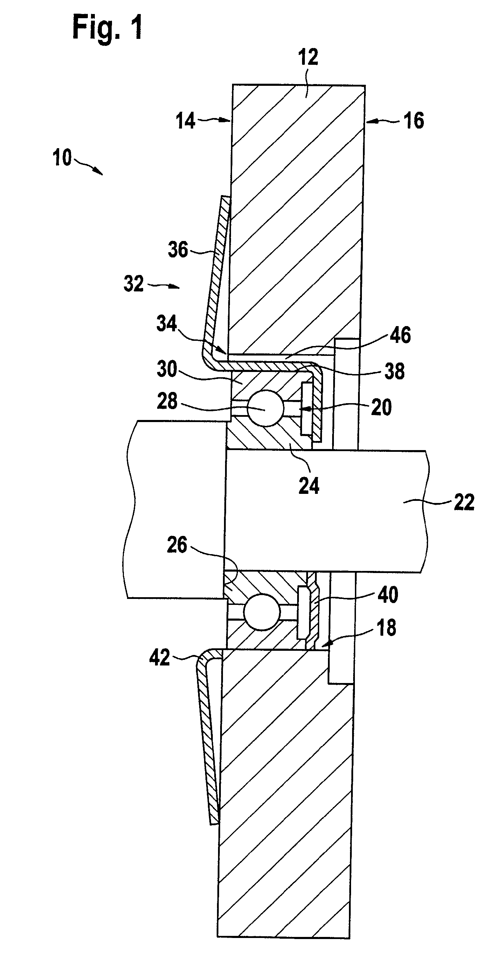

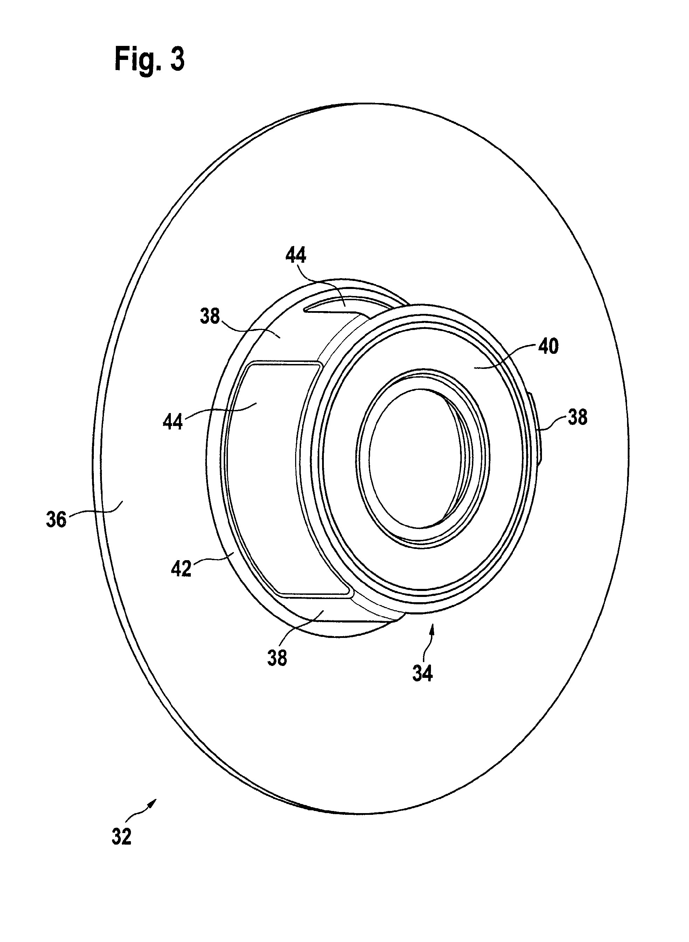

Fig.1 shows a cross sectional view of a preferred embodiment of a bearing assembly 10 according to the invention. Reference number 12 indicates a rear wall of a generator housing, i.e. opposed to the front wall next to the drive pulley of the generator. This rear wall 12 has an inner side 14, which faces the inside of the generator housing, and an opposite outer side 16. The rear wall 12 is traversed by a cylindrical passage 18, within which a ball-bearing 20 is mounted for supporting a rotary shaft 22 of the generator. An inner race 24 of the ball-bearing 20 is press-fitted onto the shaft 22 and is in abutment with a shoulder 26 of the shaft 22 inside the generator housing. A number of steel balls 28 of the ball-bearing 20 are arranged between the inner race 24 and an outer race 30. The bearing assembly 10 further includes a capsule, generally indicated 32, formed of a cylindrical part 34 and of a conical spring washer 36 made of steel (see also Fig.3). The outer race 30 is tightly received in the cylindrical part 34, which is fitted in the passage 18. The diameter of the passage 18 is such that the cylindrical part 34, equipped with the ball-bearing 20, can be slidingly fitted therein. The spring washer 36, which is formed in one piece with the cylindrical part 34, extends out of the passage 18 and bears on the inner side 14 of the rear wall 12. In such a bearing assembly 10, the outer race 30 is submitted by the spring washer 36 of the capsule 32 to a spring force which, due to action and reaction forces, permits to compensate the operational play of the ball-bearing 20. Moreover, this structure allows axial movement to the ball-bearing due to thermal expansion in the generator in operation.

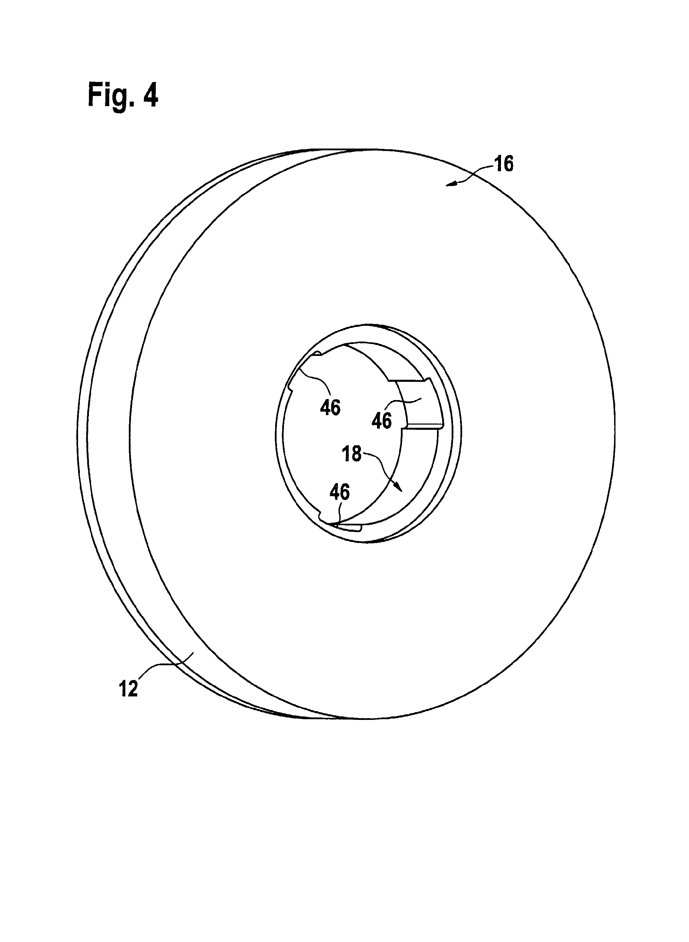

It shall be appreciated that, in order to avoid rotation of the cylindrical part 34 in the passage 18, the cylindrical part 34 and the passage 18 are configured in such a way as to interlock with each other. This will be clearly understood from Figs.3 and 4, in which the capsule 32 and the passage 18 are illustrated. The cylindrical part 34, in Fig.3, is formed by three cylindrically curved elements 38, which partially circumscribe an imaginary cylinder. These elements 38 are equally distributed about the circumference of the imaginary cylinder. Moreover, the elements 38 extend between a stop flange 40 and a connection flange 42 situated at opposite ends of the imaginary cylinder. The stop flange 40 extends inwardly, i.e. towards the inside of the imaginary cylinder, and is in abutment with the side of the outer race 30 facing the exterior (see Fig.1). The connection flange 42 extends outwardly and is continued by the spring washer 36. As a result, the cylindrical part 34 has three axial slots 44. As can be seen in Fig.4, the passage 18 of the rear wall 12 is provided with three axial grooves 46, which are arranged in such a way as to receive the cylindrically curved elements 38 of the cylindrical part 34. To assemble the capsule 32 to the rear wall 12, it suffices to align the cylindrically curved elements 38 with the grooves 46 and then to introduce these elements 38 into the grooves 46. As a result, the cylindrical part 34, and hence the capsule 32, is automatically locked against rotation in the passage 18.

Preferably, the diameter of the imaginary cylinder corresponds to that of the outer race 30, and the depth of the grooves 46 corresponds to the thickness of the cylindrically curved elements 38. Moreover, the diameter of the passage 18 should preferably be slightly greater than the diameter of the outer race 30 so as to provide a slight play, also called slide-fit, between the outer race 30 and the passage18. Such a slide-fit permits to slidingly fit the outer race in the passage 18, ensures a proper centering of the ball-bearing 20 in the passage 18 and allows axial movement to the ball-bearing. It follows that this interlocking structure permits a direct contact between the outer race 30 and the rear wall 12 through the axial slots 44. This is shown in Fig.1, where the part of the outer race 30 situated above the shaft 22 is covered by one of the elements 38 engaged in a groove 46. The part of the outer race 30 situated below the shaft 22 is however in direct contact with the rear wall 12.

It shall also be noted that the stop flange 40 preferably almost extends to the shaft 22, so as to protect the exterior side of the ball-bearing 20, as shown in Fig.1.

The assembly of the bearing assembly 10 is simple. A first possibility is to mount the ball-bearing 20 onto the shaft 22, and to then press-fit the capsule 32 onto the outer race 30. The shaft 22 is then ready to be slindingly inserted into the passage 18. Another possibility is to first press-fit the capsule 32 onto the outer race 30 and then to press-fit the capsule 32 and the ball-bearing 20 onto the shaft 22. It is clear that if the capsule 32 is to be press-fitted onto the outer race 30, its inner diameter should be slightly inferior to that of the outer race 30. A tight fitting of the outer race 30 in the cylindrical part 34 of the capsule 32 permits to avoid rotation of the outer race 30 therein. The cylindrical part 34 and the outer race 30 could however be designed in such a way as to interlock with each other.

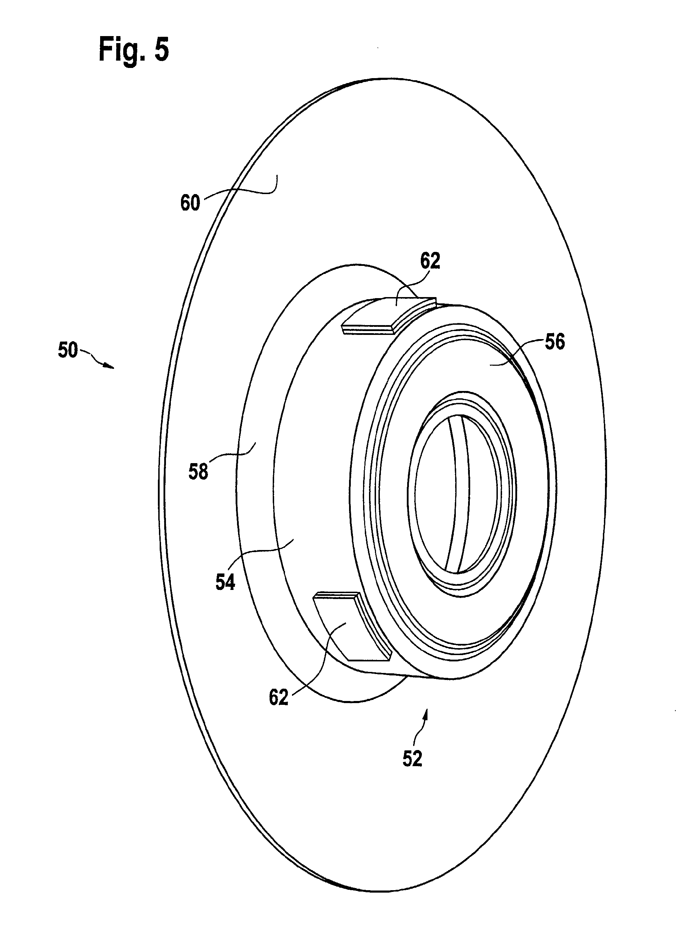

An alternative embodiment of a capsule 50 to be used in another bearing assembly according to the invention is shown in Fig.5. The cylindrical part 52 is a cylinder 54 provided at one end with an inwardly extending stop flange 56, i.e. extending towards the interior of the cylinder 54. At its other end, the cylinder 54 further comprise a stop flange 58, which extends outwardly. The cylindrical part 52 is formed in one piece with a conical spring washer 60, which continues the connection flange 58. It shall be appreciated that the cylinder 54 is provided on its outer surface with three protruding pads 62 (only two of which are shown in Fig.5), equally distributed about its periphery. These pads 62 are intended to interlock with axial grooves, similar to the grooves 46 in Fig.4, so that the cylindrical part is automatically locked against rotation in the passage in the rear wall. With such a capsule 50, the inner diameter of the passage in the rear wall should corresponds to the outer diameter of the cylinder 54, and the thickness of the protruding pads 62 should corresponds to the depth of the axial grooves. Preferably, the outer diameter of the cylinder 54 and the diameter of the passage in the rear wall are determined in such a way as to have a slide-fit between the cylinder wall and the passage.

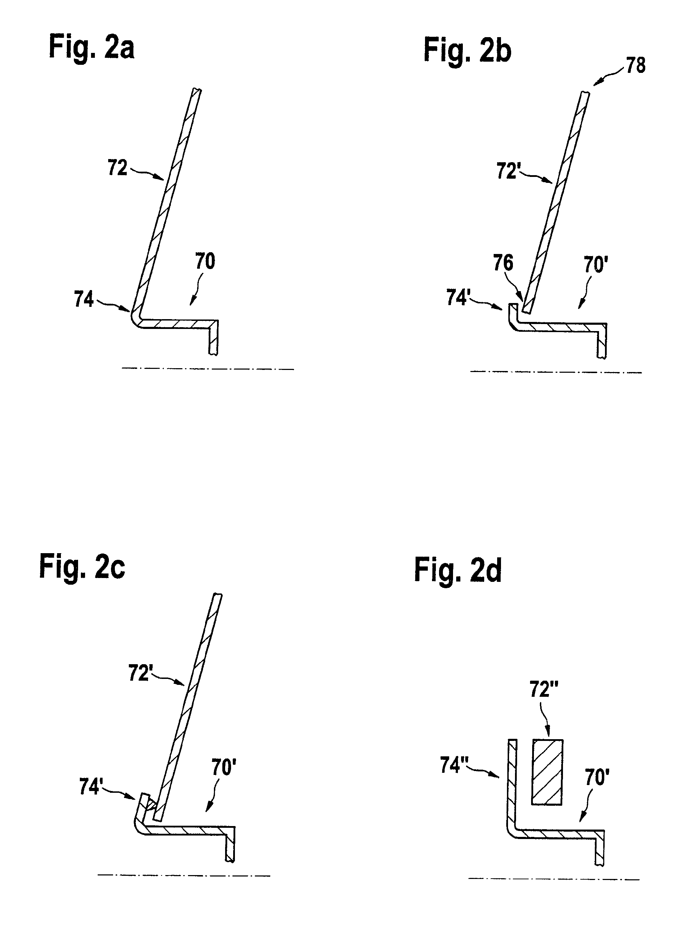

In Fig.2 different concepts of capsules are schematically illustrated. Only one half of each capsule is shown as the other half is symmetrical with respect to the axis. Concept a) concerns the capsule shown in Figs.3 and 5. The cylindrical part 70 is formed in one piece with the conical spring washer 72, the latter continuing the connection flange 74 of the cylindrical part 70. It is however possible to manufacture the cylindrical part and the spring washer separately. In such a case, the spring washer 72' is preferably inserted between the connection flange 74' of the cylindrical part 70' and the rear wall, as shown in sketches b) to d), in such a way that the inner border 76 of the spring washer 72' is operatively connected to the connection flange 74' and that its peripheral border 78 bears on the inner side of the rear wall. The rear wall, which is not shown, would of course be on the right hand side of the spring washer 72'. According to concept b), the conical spring washer 72' simply bears against the connection flange 74', whereby the spring force is transferred to the cylindrical part 70'. Concept c) is relatively similar to concept b), but the conical spring washer 72' is spot welded to the connection flange 74'. In concept d), the spring washer is a waved spring washer 72" inserted between an enlarged connection flange 74" and the inner side of the rear wall.

It will be noted that the capsules shown in Figs.1, 2, 3 and 5, allow to exert an axial spring force directed from the exterior to the interior of the generator housing, although no spring is installed outside the generator. Indeed, the spring force generated by the spring washer is transmitted to the cylindrical part via the connection flange. This spring force is then transmitted to the outer race by the cylindrical part and the stop flange. As a result, the ball-bearing is pushed towards the shoulder, thereby compensating operational play of the ball-bearing.

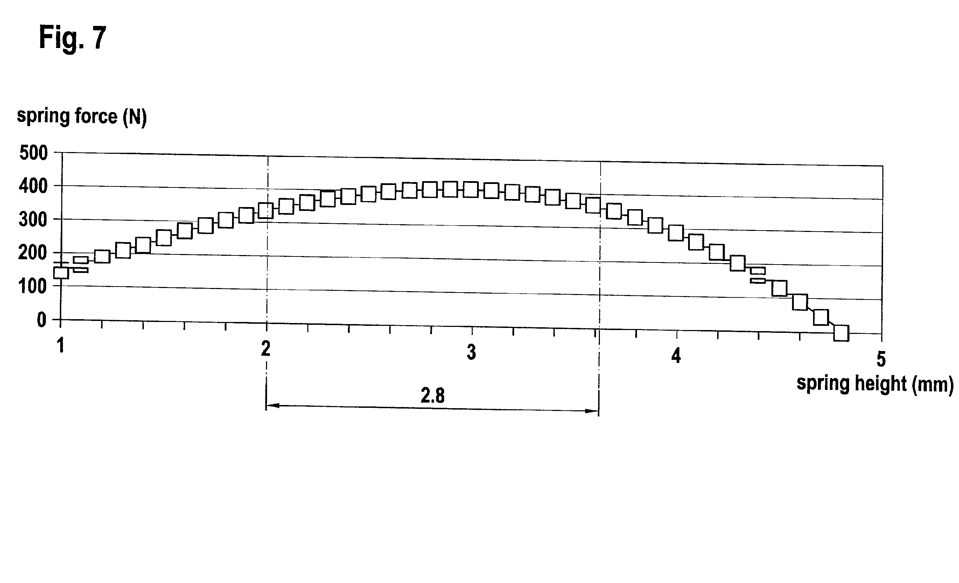

For optimal operating conditions of the ball-bearing, the latter should be permanently submitted by the capsule to a pre-load within a certain range. Accordingly, the spring washer should preferably be in an initial compressed configuration in the bearing assembly so as to exert a pre-load within the desired range on the ball-bearing. Moreover, the stiffness characteristic of the spring washer should advantageously be such that, even if the spring washer is further compressed or extended from this initial compressed configuration, the pre-load on the ball-bearing remains within the desired range. This will be clearly understood from Fig.7, in which the spring force of a spring washer is plotted versus its height (initial height is 4.8 mm). Let us now assume that the ball bearing to be preloaded by this spring washer runs optimally when the spring force ranges from 340 to 400 N. As can be seen, the spring force is within this desired range for a corresponding spring height varying between 2 and 3.6 mm. In such a case, the targeted height of the spring washer in the initial compressed configuration should be 2.8 mm. Hence, the spring force remains in the desired range for further variations in the spring height of 0.8 mm due to compression or extension.

## Claims

1. A bearing assembly for a rotary shaft machine comprising:
a support wall (12) having an essentially cylindrical passage (18) therethrough;
a rolling bearing (20) mounted within said passage (18) and having an inner race (24), an outer race (30) and rolling elements (28) in between, said inner race (24) being mountable onto a shaft (22) in such a way as to abut against a shoulder (26) of said shaft (22); and
a capsule (32,) comprising a cylindrical part (34,) and spring means (36), said cylindrical part (34) being fitted in said passage (18) and receiving said outer race (30), the diameter of said passage (18) being such that said cylindrical part (34), equipped with said rolling bearing (20), can be slidingly fitted therein, and said spring means (36) bearing on said support wall (12) and being operatively connected to said cylindrical part (34) in such a way that the latter exerts a spring force on said outer race (30), said spring force tending to push said rolling bearing (20) against said shoulder (26) so as to compensate operational play of said rolling bearing (20);
**characterized in that**
said cylindrical part (34) and said passage (18) are configured in such a way as to interlock with each other so as to prevent rotation of said cylindrical part (34) in said passage (18).

2. The bearing assembly according to claim 1, **characterized in that**
said cylindrical part (34) is formed by at least two cylindrically curved elements (38) arranged in such a way as to partially circumscribe an imaginary cylinder having a diameter corresponding to that of said outer race (30), said at least two cylindrically curved elements (38) extending between an inwardly extending stop flange (40) in abutment with said outer race (30) and an outwardly extending connection flange (42) operationally connected to said spring means (36) out of said passage (18); and
said passage (18) is provided with at least two axial grooves (46) in which said cylindrically curved elements (38) are engaged.

3. The bearing assembly of claim 2, **characterized in that** the depth of said axial grooves (46) corresponds to the thickness of said cylindrically curved elements (38), whereby direct contact between said outer race (30) and said support wall (12) is allowed.

4. The bearing assembly of claim 2 or 3, **characterized in that** said at least two cylindrically curved elements (38) are equally distributed about the circumference of said imaginary cylinder.

5. The bearing assembly according to claim 1, **characterized in that**
said cylindrical part (52) is a cylinder (54) provided at one end with an inwardly extending stop flange (56) in abutment with said outer race and at the other end with an outwardly extending connection flange (58) operatively connected to said spring means (60), said cylinder (54) being provided on its outer surface with at least one protruding element (62); and
said passage is provided with at least one axial groove in which said protruding element (62) is received so as to prevent rotation of said cylindrical part (52).

6. The bearing assembly according to claim 5, **characterized in that** the inner diameter of said passage corresponds to the outer diameter of said cylinder (54); and **in that** the thickness of said protruding element (62) corresponds to the depth of said axial groove.

7. The bearing assembly according to anyone of claims 2 to 6, **characterized in that** said spring means (36) includes a spring washer having an inner border and a peripheral border; and **in that** said inner border is operatively connected to said connection flange and said peripheral border bears on said support wall (12).

8. The bearing assembly according to claim 7, **characterized in that** said spring washer (36) is formed in one piece with said cylindrical part (34).

9. The bearing assembly according to claim 7, **characterized in that** said cylindrical part (70') and said spring washer (72', 72") are manufactured separately, said spring washer (72', 72") being inserted between said support wall and said connection flange (74', 74") so that its inner border (76) abuts against said connection flange (74', 74").

10. The bearing assembly according to claim 9, **characterized in that** said spring washer (72') is welded to said connection flange (74').

11. The bearing assembly according to anyone of claims 2 to 10, **characterized in that** said spring washer is a conical spring washer.

12. The bearing assembly according to claim 9, **characterized in that** said spring washer is a waved spring washer (72").

13. Use of the bearing assembly according to anyone of the preceding claims as a rear bearing assembly, opposed to drive means bearing assembly, in a generator.
